# DEMANDE DE BREVET EUROPEEN

(11) **EP 3 396 871 A1**
(43) Date de publication de la demande: **31.10.2018**
(21) Numéro de dépôt: 17167994.7
(22) Date de dépôt: 25.04.2017
(51) Int. Cl.: H04B 10/114, G04R 20/26, G04C 11/00, G04G 5/00

(54) **PROCEDE DE TRANSMISSION DE DONNEES D'UN APPAREIL ELECTRONIQUE VERS UN DISPOSITIF ELECTRONIQUE**

(71) Demandeur: ETA SA Manufacture Horlogère Suisse, 2540 Grenchen (CH)
(72) Inventeur: Bonnet, Thierry, 1205 Genève (CH)
(74) Mandataire: Goulette, Ludivine

(57) **Abrégé**

L'invention concerne un procédé (Pcd) de transmission de données d'un appareil électronique vers un dispositif électronique, comportant les étapes suivantes :
- émettre (Pcd_Em1) une séquence de signaux lumineux par une source lumineuse de l'appareil électronique, chaque signal présentant un niveau d'intensité lumineuse appartenant à un ensemble d'au moins quatre niveaux d'intensité lumineuse, ladite séquence correspondant à un codage des données à transmettre,
- détecter (Pcd_Det1) des niveaux d'intensité lumineuse successifs par un capteur optique du dispositif électronique, de sorte à reconstituer la séquence,
- décoder (Pcd_Dec) la séquence afin de reconstituer les données.

## Description

### DOMAINE TECHNIQUE

La présente invention concerne un procédé de transmission de données d'un appareil électronique vers un dispositif électronique, notamment une montre électronique.

### ART ANTERIEUR

Les montres dites « connectées », aptes à communiquer avec un appareil électronique tel qu'un smartphone, se sont imposées ces dernières années dans le milieu horloger. Le réglage d'une telle montre peut s'effectuer manuellement, notamment via l'activation de boutons poussoirs, de couronnes et/ou de touches tactiles, ce qui est relativement contraignant pour l'utilisateur ou le service après-vente chargé du réglage.

Pour éviter ces inconvénients, il est maintenant possible de régler une montre électronique de façon automatique, en l'équipant de dispositifs supportant la technologie Bluetooth Low Energy ou une technologie de communication en champ proche. Cependant, ces dispositifs sont assez complexes à mettre en place et demandent à incorporer des moyens de communication spécifiques tant sur l'appareil électronique que sur la montre, notamment des antennes. Ils doivent également être certifiés ce qui occasionne un surcoût supplémentaire.

Dans la demande de brevet EP16157655, il a été proposé une nouvelle façon de transférer des données de réglage à une montre électronique à partir d'un appareil électronique, typiquement un smartphone, plus simple et moins onéreuse que les solutions précédemment citées. Pour cela, la montre comporte un phototransistor destiné à détecter des signaux lumineux en provenance d'une source lumineuse de l'appareil électronique. Ces signaux lumineux codent des données par l'intermédiaire d'une modulation à deux états : présence ou absence de lumière. Cependant ce type de modulation optique bipolaire présente l'inconvénient de ne permettre que des débits de transmission relativement faibles. D'autre part, la transmission ne peut être qu'asynchrone, et les systèmes d'exploitation des appareils électroniques ne permettent pas de garantir une parfaite stabilité de la fréquence d'émission. Les périodes d'émission risquent donc de ne pas être de durées identiques, ce peut être la cause d'erreurs dans la réception et le décodage.

### RESUME DE L'INVENTION

La présente invention a pour but de remédier aux inconvénients présentés dans la partie précédente, en proposant un procédé de transmission optique amélioré.

A cet effet, l'invention concerne un procédé de transmission de données d'un appareil électronique vers un dispositif électronique, comportant les étapes suivantes :
- émettre une séquence de signaux lumineux par une source lumineuse de l'appareil électronique, chaque signal présentant un niveau d'intensité lumineuse appartenant à un ensemble d'au moins quatre niveaux d'intensité lumineuse, ladite séquence correspondant à un codage des données à transmettre,
- détecter des niveaux d'intensité lumineuse successifs par un capteur optique de la montre, de sorte à reconstituer la séquence,
- décoder la séquence afin de reconstituer les données.

Avantageusement, le dispositif électronique est une montre électronique, mais on comprend que le procédé pourrait tout à fait être adapté à d'autres types de dispositifs électroniques et qu'aucune étape du procédé n'impose de limiter le dispositif récepteur à une montre électronique.

Le codage des données étant réalisé sous la forme de signaux lumineux à au moins quatre états, on dira que les signaux codent ces données par l'intermédiaire d'une modulation optique à au moins quatre niveaux, appelée plus simplement modulation optique multiniveaux. Par multi, on entendra donc au moins quatre.

Ce procédé présente l'avantage de pouvoir être mis en oeuvre de manière majoritairement automatique. En particulier, dans le cas où le dispositif électronique est une montre électronique, ce procédé peut être mis en oeuvre sans que l'utilisateur n'ait à effectuer de réglage complexe via des couronnes, boutons poussoirs ou touches tactiles par exemple. Naturellement, le procédé doit être amorcé, ce qui peut être réalisé soit manuellement via appui sur un bouton poussoir, soit automatiquement, par exemple via un système en veille par défaut qui se réveille à réception d'une certaine séquence lumineuse. La transmission automatisée de données entre l'appareil électronique et la montre électronique permet de faciliter grandement la programmation de la montre. Elle permet également d'éviter les erreurs ou les imprécisions résultant d'une configuration manuelle. Elle offre à l'utilisateur la possibilité d'utiliser l'interface plus conviviale de l'appareil électronique, typiquement une application d'un smartphone, pour sélectionner et configurer les données à transférer à la montre. Toutes sortes de données peuvent être transmises par ce moyen, y compris de courts messages, sous réserve des capacités d'affichage de la montre. Ainsi on pourra effectuer facilement la mise à l'heure, les changements d'heure, le réglage d'une alarme, le réglage du quantième, ou transmettre d'autres informations comme les phases de lune, les horaires et coefficients des marées, les horaires de couché et de lever du soleil, etc.

En outre, ce procédé présente l'avantage de ne pas nécessiter d'incorporer d'antennes de communication (onéreuses, encombrantes et parfois incompatibles avec des habillages métalliques) sur la montre (ou plus généralement, le dispositif électronique) ou l'appareil électronique, le système de communication optique entre la montre et l'appareil électronique n'étant constitué que d'une source lumineuse ponctuelle de type diode électroluminescente et d'un capteur optique, par exemple un phototransistor ou une photodiode.

Enfin, le procédé selon l'invention est particulièrement avantageux en ce qu'il permet soit une transmission asynchrone à débit plus élevé que dans le cas d'une modulation optique bipolaire, soit une transmission synchrone, comme cela est expliqué ci-après.

Dans le cas d'une transmission asynchrone, l'émission de signaux lumineux sur au moins quatre niveaux d'intensité lumineuse permet d'accélérer la transmission. En effet, au lieu de détecter si la source lumineuse est allumée ou éteinte comme c'est le cas dans la demande EP16157655, c'est-à-dire détecter des niveaux d'intensité parmi deux possibilités, on détecte le niveau d'intensité lumineuse de ladite source parmi au moins quatre possibilités. Le débit est donc au moins doublé (en particulier, il est doublé si la source lumineuse peut prendre quatre et seulement quatre niveaux d'intensité lumineuse différents).

Dans le cas d'une transmission synchrone, l'émission de signaux lumineux sur au moins quatre niveaux d'intensité lumineuse permet de transmettre un signal d'horloge en sus des données. Sur chaque période d'horloge, une partie des données (par exemple un ou plusieurs bits) est transmise avec la phase (état haut ou bas) de l'horloge. En particulier, lorsque l'horloge est à l'état haut, la partie de données est codée sur certains niveaux d'intensité lumineuse, alors que lorsque l'horloge est à l'état bas, ladite partie de données est codée sur d'autres niveaux d'intensité lumineuse. A l'aide de niveaux de seuils, il est donc possible pour le dispositif électronique de reconstituer les données en tenant compte du signal d'horloge également transmis.

Ainsi, dans un mode de réalisation, l'ensemble d'au moins quatre niveaux d'intensité est divisé en une première partie et une deuxième partie, un signal lumineux sur deux de la séquence présentant un niveau d'intensité lumineuse appartenant à la première partie, les autres signaux présentant un niveau d'intensité lumineuse appartenant à la deuxième partie.

Le procédé selon l'invention peut comprendre l'une ou une combinaison techniquement possible des caractéristiques suivantes.

Dans un mode de réalisation non limitatif, l'étape de détection comporte en outre une sous-étape de resynchronisation consistant à réinitialiser un compteur de périodes d'échantillonnage du dispositif électronique à détection d'un changement de luminosité par le capteur optique et à condition que les périodes d'échantillonnage comptées par le compteur soient comprises entre deux valeurs seuil.

Dans un mode de réalisation non limitatif, les niveaux d'intensité lumineuse de l'ensemble sont répartis régulièrement sur une échelle de luminosité.

Dans un mode de réalisation non limitatif, le procédé comporte une étape d'émission d'une séquence de signaux lumineux à deux niveaux d'intensité correspondant à des phases d'horloge, simultanément à l'étape d'émission de la séquence de signaux lumineux correspondant aux données à transmettre, par une deuxième source lumineuse de l'appareil électronique, et une étape de détection d'une succession des deux niveaux d'intensité lumineuse par un deuxième capteur optique du dispositif électronique, de sorte à reconstituer l'horloge, les deux séquences de signaux lumineux étant émises sur deux longueurs d'ondes distinctes.

Dans un mode de réalisation non limitatif, le procédé comporte une étape supplémentaire de génération d'un compte-rendu de transmission.

Dans un mode de réalisation non limitatif, l'étape de génération d'un compte-rendu de transmission comprend une émission d'un signal lumineux par une diode électroluminescente du dispositif électronique.

Dans un mode de réalisation non limitatif, l'étape de génération d'un compte-rendu de transmission comprend un positionnement de moyens d'affichage du dispositif électronique. Si le dispositif électronique est une montre, ces moyens d'affichage sont par exemple des aiguilles, et/ou des disques d'affichage (par exemple des disques d'affichage du jour, du mois, de la phase de lune, etc., dont une portion se trouve face à un guichet afin d'afficher une information).

Dans un mode de réalisation non limitatif dans lequel le dispositif électronique est une montre électronique, le procédé comprend une étape supplémentaire d'analyse d'une image du cadran de la montre prise par une caméra de l'appareil électronique, suite au positionnement des moyens d'affichage de la montre.

Dans un mode de réalisation non limitatif, l'appareil électronique est portable, notamment de type smartphone ou tablette électronique.

Par « appareil électronique portable », on entend un appareil électronique, aussi appelé terminal utilisateur, capable d'être porté et transporté par un utilisateur, et d'être fonctionnel lors de son transport. C'est le cas par exemple d'un smartphone. Naturellement, les appareils nécessitant une alimentation secteur, par exemple les ordinateurs de bureau, sont exclus de cette définition. Les ensembles d'appareils, par exemple un ordinateur portable auquel un périphérique est connecté par liaison sans fil ou filaire sont également exclus de cette définition.

Ce procédé présente l'avantage de nécessiter très peu de matériel : un appareil portable de type smartphone avec une application mobile appropriée suffit à le mettre en oeuvre. Le procédé ne requiert pas l'utilisation de matériel dédié tel qu'un capteur à brancher à un ordinateur, ni de matériel encombrant. N'importe quelle personne (par exemple un horloger) disposant d'un smartphone ayant l'application appropriée pourrait mettre en oeuvre le procédé.

Dans un mode de réalisation non limitatif, la source lumineuse est une zone d'un écran d'affichage de l'appareil électronique.

Dans un mode de réalisation non limitatif, la source lumineuse est une diode électroluminescente servant également de flash pour l'appareil électronique.

### BREVE DESCRIPTION DES FIGURES

Les détails de l'invention apparaîtront plus clairement à la lecture de la description qui suit, faite en référence aux dessins annexés dans lesquels :
- la figure 1 représente une montre, vue côté cadran, recevant, par l'intermédiaire d'un capteur optique, un signal lumineux émis par une diode électroluminescente d'un smartphone aussi utilisée en tant que flash dudit smartphone, ledit smartphone étant vu côté dos
- la figure 2 représente une montre, vue côté fond, recevant, par l'intermédiaire d'un capteur optique, un signal lumineux émis par une portion d'un écran de smartphone, le capteur optique étant positionné en vis-à-vis de ladite portion, le smartphone étant vu côté écran
- la figure 3 représente des niveaux d'intensité lumineuse en fonction de phases d'une horloge, dans le cas d'une modulation optique synchrone à quatre niveaux d'intensité lumineuse
- la figure 4 représente des niveaux d'intensité lumineuse émis par une source lumineuse d'un appareil électronique portable, avant et après une étape de calibration du procédé selon un mode de réalisation de l'invention

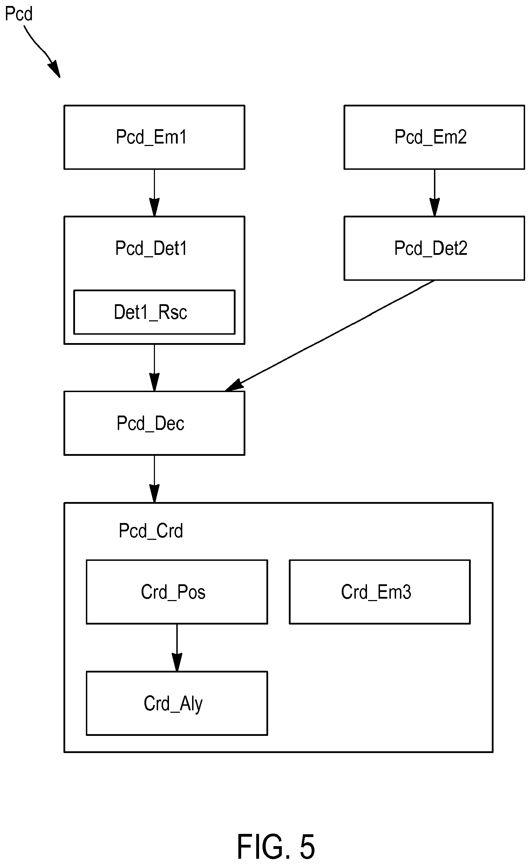

- la figure 5 représente des étapes du procédé selon un mode de réalisation de l'invention.

### DESCRIPTION DETAILLEE

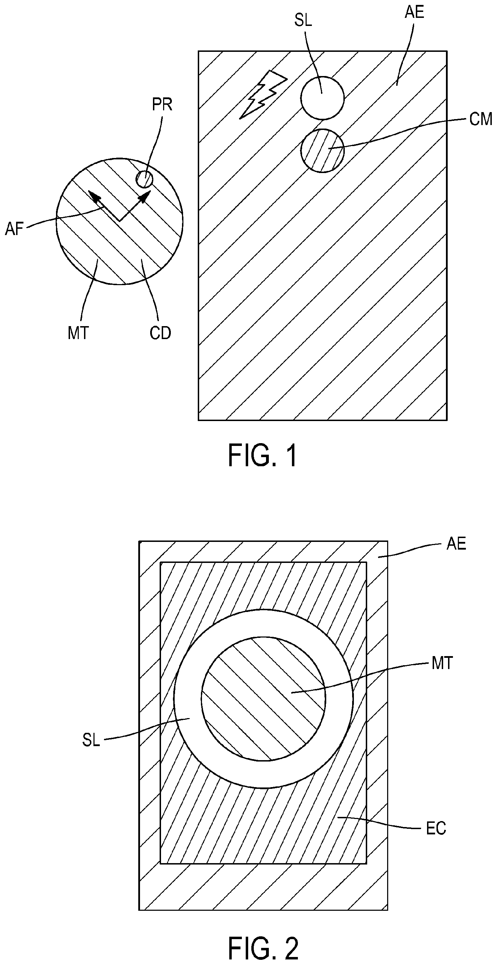

Les figures 1 et 2 représentent un dispositif électronique MT, dans le cas présent une montre électronique bien que cela ne soit pas limitatif, et un appareil électronique AE aptes à mettre en oeuvre le procédé de transfert de données selon l'invention. Plus particulièrement, la montre MT est équipée d'un capteur optique PR, dans le cas présent un phototransistor bien que cela ne soit pas limitatif, connecté à un microcontrôleur (non représenté) de la montre MT. Le procédé de transmission consiste à émettre une séquence de signaux lumineux par une source lumineuse SL de l'appareil électronique AE sur au moins quatre niveaux distincts d'intensité lumineuse, à recevoir la séquence de signaux lumineux par le capteur optique PR du dispositif électronique MT, et à convertir la séquence reçue en signal exploitable.

Dans une première configuration représentée à la figure 1, le phototransistor PR est situé sous le cadran CD de la montre MT, en vis-à-vis d'une ouverture laissant passer la lumière. Dans une autre configuration, le phototransistor PR est situé du côté du fond de la montre MT qui est au moins partiellement transparent pour laisser passer la lumière ou qui possède une trappe amovible. Naturellement, de nombreuses autres configurations peuvent être envisagées. On note que le capteur optique n'est pas nécessairement un phototransistor, il peut alternativement s'agir d'une photodiode ou d'une cellule photovoltaïque.

Le transfert de données depuis l'appareil électronique AE s'effectue par l'intermédiaire de la source lumineuse SL, par exemple un flash ou un écran EC dudit appareil AE. Dans la configuration représentée à la figure 1, l'appareil électronique AE est un smartphone et l'émission des signaux lumineux est réalisée via le flash du smartphone qui constitue la source lumineuse. Le flash étant situé au dos de l'appareil il est possible d'utiliser l'écran EC de l'appareil AE pour gérer l'application de transfert à l'aide de l'écran EC du smartphone pendant les transferts de données tout en contrôlant visuellement les modifications apportées à l'affichage de la montre MT.

Dans la configuration représentée à la figure 2, l'appareil électronique AE est un smartphone et l'émission des signaux lumineux est réalisée via l'écran EC du smartphone. Plus précisément, l'écran EC comporte une zone en forme de disque, dont le niveau de luminosité est homogène, ladite zone constituant la source lumineuse SL. La montre MT est placée directement contre ou face à l'écran EC du smartphone, en vis-à-vis du disque lumineux. Dans ce cas, l'application doit être configurée avant d'effectuer le transfert et, si le cadran CD de la montre MT n'est pas visible, une étape de contrôle du transfert de données doit être effectuée après l'opération. Cette configuration présente l'avantage d'être moins sensible aux perturbations lumineuses extérieures que la configuration de la figure 1.

Dans une variante d'exécution de la configuration précédente, l'écran EC peut être séparé en deux zones afin de circonscrire la source lumineuse à l'une des zones de l'écran EC. La zone restante de l'écran EC est réservée à l'interface utilisateur de l'application contrôlant le transfert de données. La transmission de données et le contrôle de son exécution se trouvent ainsi facilités.

On note que l'appareil électronique AE représenté est de type portable, mais il pourrait alternativement être un périphérique connecté à un ordinateur de bureau, par exemple par liaison USB, ce périphérique comprenant une source lumineuse telle que décrite dans les paragraphes précédents (une diode électroluminescente ou une portion d'un écran du périphérique). Cette variante présente l'avantage de pouvoir accroitre la vitesse de modulation qui pourrait être limitée par les performances des appareils électroniques portables de type smartphone.

Le transfert de données peut être effectué à l'aide de différents types de modulation optique. Comme évoqué précédemment, une modulation bipolaire de type NRZ est facile à mettre en oeuvre mais présente des performances limitées. Il est donc avantageux de profiter des possibilités des écrans ou des flashs des smartphones (ou plus généralement des écrans ou flashs d'appareils électroniques portables) pour réaliser une modulation optique multiniveaux. Les écrans et les flashs récents peuvent en effet généralement émettre sur au moins 4 niveaux d'intensité lumineuse distincts (dont un niveau peut par exemple correspondre à l'état « pas d'émission de lumière »).

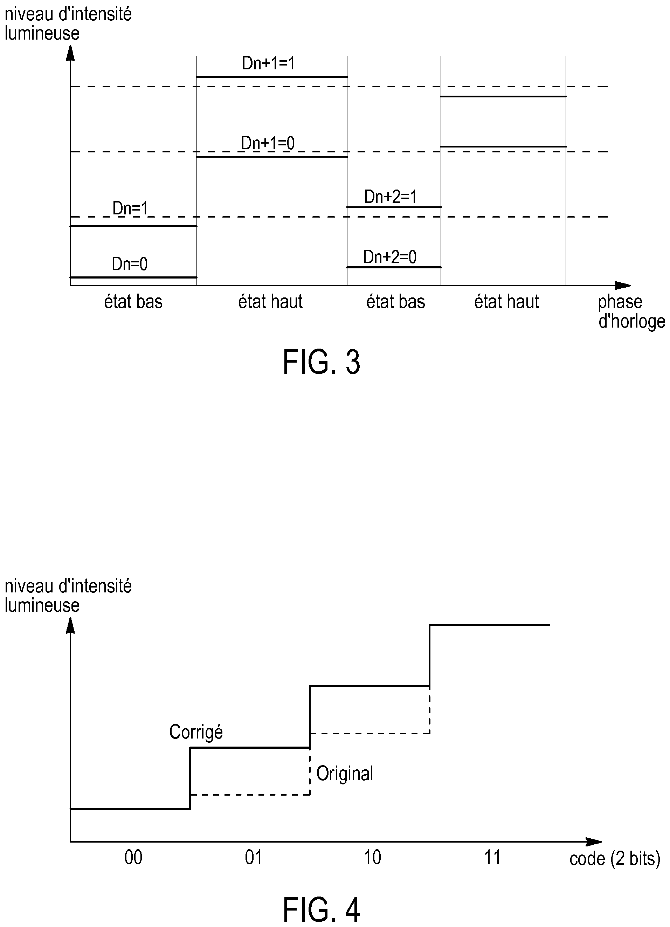

La modulation multiniveau synchrone selon l'invention permet de transmettre à chaque période d'horloge une partie des données (par exemple un bit) mais également la phase (état bas ou état haut) de l'horloge, tout ceci grâce à une seule et unique séquence de signaux lumineux. La figure 3 représente un exemple de modulation synchrone à quatre niveaux, qui permet à chaque phase d'horloge de transmettre un bit et ladite phase. Dans cet exemple, les phases n et n+2 correspondent à un état bas de l'horloge, et les phases n+1 et n+3 correspondant à un état haut de l'horloge. Sur un état bas de l'horloge, le bit à transmettre est codé sur les 2 niveaux d'intensité lumineuse les plus bas. Sur un état haut de l'horloge, le bit à transmettre est codé sur les 2 niveaux d'intensité lumineuse les plus hauts.

Par ailleurs, dans le cas d'une modulation multiniveau asynchrone, il est avantageux de choisir une fréquence d'échantillonnage de la montre MT qui soit beaucoup plus grande que la fréquence théorique d'émission de l'appareil électronique AE, de sorte à s'affranchir des possibles variations de la période d'émissions. Typiquement, la fréquence d'échantillonnage est choisie 16 fois plus grande que la fréquence d'émission.

En outre, le procédé selon l'invention dans le cas d'une transmission optique asynchrone comprend avantageusement une étape de resynchronisation mettant en oeuvre un compteur de périodes d'échantillonnage de la montre MT. Dans le cas d'une fréquence d'échantillonnage 16 fois plus grande que la fréquence d'émission, aucune transition (de 0 à 1, ou inversement) ne devrait être détectée durant les 8 premières périodes d'échantillonnage comptées par le compteur. Si une telle transition existe, elle est interprétée comme une erreur. Ce genre d'erreur résulte par exemple d'un scintillement de la source lumineuse qui serait interprété, à tort, comme un changement de niveau. En revanche, une transition est recherchée dans les 12 périodes d'échantillonnage suivant les 8 premières périodes d'échantillonnage. Si une telle transition est détectée, alors le bit précédent est enregistré et le compteur est remis à sa valeur initiale.

De plus, lorsqu'aucune transition n'est détectée pendant un nombre de périodes d'échantillonnage important, il y a un risque de déphasage entre l'appareil électronique AE émetteur et la montre MT réceptrice dû à l'instabilité de la fréquence d'émission du signal codé. Il est intéressant dans ce cas d'utiliser la technique du « bit stuffing » qui consiste à ajouter des transitions fictives permettant de resynchroniser régulièrement le récepteur avec l'émetteur. Par exemple, dans une transmission d'une longue série de bits de valeur zéro, on introduit un bit de valeur un après une série de cinq zéro. Du côté récepteur, la procédure inverse est effectuée : après détection de cinq bits successifs de valeur zéro, un bit de valeur un est attendu. Si ce n'est pas le cas, il est déterminé qu'une erreur s'est produite. Si c'est le cas, le bit de valeur un n'est pas pris en compte pour le décodage et le compteur est réinitialisé.

Selon un mode de réalisation du procédé selon l'invention, le procédé de transmission comporte une étape de calibration des niveaux d'intensité lumineuse émis par la source lumineuse de la montre MT. Ces niveaux sont calibrés de telle sorte qu'ils soient répartis régulièrement par rapport à une échelle de luminosité, c'est-à-dire de telle sorte que l'écart de luminosité entre deux niveaux les plus proches est constant. Cette étape permet d'optimiser la distinction des différents niveaux de luminosité afin d'éviter les erreurs de lecture de niveau du côté récepteur. Un exemple est représenté à la figure 4. Cette figure montre des niveaux de luminosité en fonction des données à coder, avant calibrage (courbe « original ») et après calibrage (courbe « corrigé »).

Dans un mode de réalisation dans lequel la transmission de données est asynchrone, la montre MT est équipée de deux capteurs optiques aptes à recevoir des longueurs d'ondes distinctes, par exemple celle correspondant au bleu pour le premier capteur optique et celle correspondant au rouge pour le deuxième capteur optique. De même, l'appareil électronique AE est équipé de deux sources lumineuses aptes à émettre sur ces deux longueurs d'ondes. Dans ce cas, l'une des sources transmet les données de manière asynchrone, tandis que l'autre source lumineuse transmet un signal d'horloge, ceci afin que le récepteur puisse se synchroniser sur l'émetteur.

Dans un mode de réalisation, le procédé comporte une étape de génération d'un compte rendu de transmission, le compte-rendu étant produit par la montre MT à destination de l'utilisateur ou de l'appareil électronique AE. Par exemple, à la fin d'une opération de transmission, des moyens d'affichage de la montre AF (par exemple les aiguilles des heures, minutes et secondes) de la montre peuvent être positionnées de telle sorte à signifier la réussite ou l'échec de la transmission. Cette position particulière des moyens d'affichage AF peut être relevée par l'utilisateur qui est ainsi informé du déroulé de la transmission. Alternativement, l'appareil électronique AE peut, grâce à sa caméra CM et à des moyens d'analyse d'image, analyser la position des moyens d'affichage AF de la montre MT et en déduire si la transmission a été effectuée correctement ou non. Il est également possible d'ajouter sur la montre MT une diode électroluminescente capable d'émettre, à la fin d'une transmission, une courte séquence destinée à être reçue par un capteur optique de l'appareil électronique AE. Suivant la séquence, l'appareil électronique AE peut déterminer si la transmission s'est déroulée correctement.

En conclusion, la transmission optique multiniveau entre un appareil électronique et un dispositif électronique permet, selon le mode asynchrone ou synchrone choisi, d'augmenter le débit de la transmission ou d'en réduire les risques d'erreurs. Naturellement, l'homme du métier saura réaliser de multiples variations à partir des modes de réalisation présentés sans sortir du cadre des revendications. Par exemple, comme cela a déjà été mentionné, il n'y a pas de raison de limiter le dispositif électronique à une montre électronique étant donné que l'invention porte sur un procédé de transmission de données pour lequel la nature du dispositif récepteur n'entre pas en jeu, sauf bien sûr dans le cas particulier où le procédé comporte une étape de génération d'un compte-rendu via des aiguilles de montre.

## Revendications

1. Procédé (Pcd) de transmission de données d'un appareil électronique (AE) vers un dispositif électronique (MT), comportant les étapes suivantes :
- émettre (Pcd_Em1) une séquence de signaux lumineux par une source lumineuse (SL) de l'appareil électronique (AE), chaque signal présentant un niveau d'intensité lumineuse appartenant à un ensemble d'au moins quatre niveaux d'intensité lumineuse, ladite séquence correspondant à un codage des données à transmettre,
- détecter (Pcd_Det1) des niveaux d'intensité lumineuse successifs par un capteur optique (PR) de du dispositif (MT), de sorte à reconstituer la séquence,
- décoder (Pcd_Dec) la séquence afin de reconstituer les données.

2. Procédé (Pcd) de transmission selon la revendication précédente, l'ensemble d'au moins quatre niveaux d'intensité étant divisé en une première partie et une deuxième partie, un signal lumineux sur deux de la séquence présentant un niveau d'intensité lumineuse appartenant à la première partie, les autres signaux présentant un niveau d'intensité lumineuse appartenant à la deuxième partie.

3. Procédé (Pcd) de transmission selon l'une des revendications précédentes, l'étape de détection (Pcd_Det) comportant en outre une sous-étape de resynchronisation (Det1_Rsc) consistant à réinitialiser un compteur de périodes d'échantillonnage du dispositif (MT) à détection d'un changement de luminosité par le capteur optique (PR) et à condition que les périodes d'échantillonnage comptées par le compteur soient comprises entre deux valeurs seuil.

4. Procédé (Pcd) de transmission selon l'une des revendications précédentes, les niveaux d'intensité lumineuse de l'ensemble étant répartis régulièrement sur une échelle de luminosité.

5. Procédé (Pcd) de transmission selon l'une des revendications précédentes, comportant une étape d'émission (Pcd_Em2) d'une séquence de signaux lumineux à deux niveaux d'intensité correspondant à des phases d'horloge, simultanément à l'étape d'émission (Pcd_Em1) de la séquence de signaux lumineux correspondant aux données à transmettre, par une deuxième source lumineuse (SL) de l'appareil électronique (AE), et une étape de détection (Pcd_Det2) d'une succession des deux niveaux d'intensité lumineuse par un deuxième capteur optique du dispositif (MT), de sorte à reconstituer l'horloge, les deux séquences de signaux lumineux étant émises sur deux longueurs d'ondes distinctes.

6. Procédé (Pcd) de transmission selon la revendication précédente, caractérisé en ce le deuxième capteur optique est un phototransistor ou une photodiode.

7. Procédé (Pcd) de transmission selon l'une des revendications précédentes **caractérisé en ce qu'**il comporte une étape supplémentaire de génération (Pcd_Crd) d'un compte-rendu de transmission.

8. Procédé (Pcd) de transmission selon la revendication précédente, l'étape de génération (Pcd_Crd) d'un compte-rendu de transmission comprenant une émission (Crd_Em3) d'un signal lumineux par une diode électroluminescente du dispositif (MT).

9. Procédé (Pcd) de transmission selon la revendication 7, l'étape de génération (Pcd_Crd) d'un compte-rendu de transmission comprenant un positionnement (Crd_Pos) de moyens d'affichage (AF) du dispositif (MT).

10. Procédé (Pcd) de transmission selon la revendication précédente, dans lequel le dispositif (MT) est une montre électronique, et les moyens d'affichage (AF) sont des aiguilles et/ou des disques d'affichage de ladite montre.

11. Procédé (Pcd) de transmission selon la revendication 10, comprenant une étape supplémentaire d'analyse (Crd_Aly) d'une image du cadran (CD) de la montre (MT) prise par une caméra (CM) de l'appareil électronique (AE), suite au positionnement des moyens d'affichage (AF) de la montre (MT).

12. Procédé (Pcd) de transmission selon l'une des revendications précédentes, **caractérisé en ce que** l'appareil électronique (AE) est portable, notamment de type smartphone ou tablette électronique.

13. Procédé (Pcd) de transmission selon l'une des revendications précédentes, **caractérisé en ce que** la source lumineuse (SL) est une zone d'un écran d'affichage (EC) de l'appareil électronique (AE).

14. Procédé (Pcd) de transmission selon l'une des revendications 1 à 12 **caractérisé en ce que** la source lumineuse (SL) est une diode électroluminescente servant également de flash pour l'appareil électronique (AE).

15. Procédé (Pcd) de transmission selon l'une des revendications précédentes, caractérisé en ce le capteur optique (PR) est un phototransistor.

16. Procédé (Pcd) de transmission selon l'une des revendications 1 à 14, caractérisé en ce le capteur optique (PR) est une photodiode.

17. Procédé (Pcd) de transmission selon l'une des revendications 1 à 16, dans lequel le dispositif électronique (MT) est une montre électronique.
